# EUROPÄISCHE PATENTSCHRIFT

(11) **EP 2 745 375 B1**
(45) Veröffentlichungstag und Bekanntmachung des Hinweises auf die Patenterteilung: **04.11.2015**
(21) Anmeldenummer: 12751450.3
(22) Anmeldetag: 08.08.2012
(51) Int. Cl.: H02J 9/00, H02J 3/00, H02J 3/32, H02J 3/38

(54) **ZEITVERSETZTE BATTERIEZUSCHALTUNG BEI NOTFALLANFORDERUNG**
TIME-DELAYED BATTERY ACTIVATION FOR AN EMERGENCY REQUEST
MISE EN CIRCUIT DIFFÉRÉE DE BATTERIES EN CAS DE DEMANDE EXCEPTIONNELLE

(30) Priorität: 20.08.2011 DE 102011111192
(43) Veröffentlichungstag der Anmeldung: 25.06.2014
(73) Patentinhaber: Adensis GmbH, 01129 Dresden (DE)
(72) Erfinder: BECK, Bernhard, 97332 Volkach OT Dimbach (DE)
(86) Internationale Anmeldenummer: PCT/EP2012/003378
(87) Internationale Veröffentlichungsnummer: WO 2013/026532

(56) Entgegenhaltungen:
- EP-A1- 1 986 306
- EP-A2- 2 330 726
- JP-A- 6 266 458
- JP-A- 2007 295 718

## Beschreibung

Die Erfindung bezieht sich auf eine Photovoltaikanlage, die sich aus einer Mehrzahl von Photovoltaikteilanlagen zusammensetzt, von denen jede einen Photovoltaikgenerator umfasst, der an den Eingang eines ihm zugeordneten Wechselrichters zuschaltbar ist, wobei dem Wechselrichter ein Regelglied zur Einstellung des maximalen Leistungspunkts (MPP) der an ihm angeschlossenen Photovoltaikteilanlage inhärent ist, und von denen jede eine parallel zu dem Photovoltaikgenerator zuschaltbare Batterie aufweist, wobei die Ausgänge aller Wechselrichter an ein gemeinsames Stromversorgungsnetz anschließbar sind, welches von einem Netzbetreiber betrieben wird. Die Erfindung bezieht sich weiterhin auf ein zugehöriges Verfahren zum Betreiben der Photovoltaikanlage.

In jüngster Zeit wird die Stabilität von elektrischen Versorgungsnetzen mehr und mehr zum Thema. Insbesondere der Einsatz von immer mehr Anlagen von regenerativer Energie trägt dazu bei, ein Versorgungsnetz weniger berechenbar und anfälliger für Versorgungsengpässe zu machen, solange die Frage einer nennenswerten Speicherung der elektrischen Energie nicht gelöst ist. Dazu ist auszuführen, dass jede Einspeisung von elektrischer Energie tendenziell spannungsanhebend wirkt und jeder Verbrauch tendenziell spannungssenkend. Da die spannungsanhebende Einspeisung sich sehr schnell ändern kann (bei Photovoltaikanlagen bewirkt eine Wolke im ansonsten blauen Himmel z.B. einen Leistungsabfall um 90 %), kann sich auch das Spannungsniveau am zugeordneten Netzverknüpfungspunkt ändern. Bei Dutzenden von Windrädern und Solaranlagen kann die Spannung im Netz entsprechend schwimmen, je nach dem, ob gerade der Wind weht und/oder die Sonne scheint. Entsprechend unsicher ist auch die Versorgungslage im Netz und es kann zu Engpässen kommen, und selbst die Gefahr eines Netzzusammenbruchs ist nicht auszuschließen.

Aus der eigenen Anmeldung EP 2 244 352 ist ein Betriebsverfahren bekannt, bei dem zwei Photovoltaikteilanlagen zunächst gemeinsam nur auf einen von zwei, den Teilanlagen jeweils zugeordneten elektro-mechanischen Wechselrichtern zugeschaltet sind. In einem weiteren Schritt wird eine Batterie an den verbleibenden, freien Wechselrichter angeschlossen, um bei schwacher Solarenergieausbeute die Ausgangsleistung des Gesamtsystems zu erhöhen.

Ferner ist es bekannt, parallel zu einem Photovoltaikgenerator mit zugehörigem Wechselrichter eine Batterie vorzusehen, die über einen eigenen Wechselrichter mit dem Versorgungsnetz verbunden werden kann, um zusätzlich Energie in das Versorgungsnetz einzuspeisen. In einer nicht vorveröffentlichten Anmeldung der Anmelderin ist es vorgesehen, den zweiten Wechselrichter für die Batterie einzusparen und stattdessen den der Photovoltaikanlage inhärenten Wechselrichter mit zu nutzen, um eine geforderte Mindestleistung am Ausgang des Wechselrichters zur Verfügung stellen zu können. Die Gesamtleistung ist dann natürlich auf die Nennleistung des Wechselrichters für den Photovoltaikgenerator beschränkt.

Weitere Photovoltaik anlagen sind aus JP 2007 295 718 A, EP 1 986 306 A1, EP 2 330 726 A2 und JP 6 266 458 A bekannt.

Vorliegende Erfindung geht aus von der Überlegung, dass bei einer drohenden Netzinstabilität die Wechselrichter aller verfügbaren Photovoltaikanlagen möglichst voll ausgenutzt werden sollten, um Energie in das Versorgungsnetz einzuspeisen. Beim Umschalten der Energiezufuhr von einem Wechselrichter einer Photovoltaikanlage, die zur Zeit nicht ihre Maximalleistung einspeist auf eine Batterie, die die Maximalleistung zur Einspeisung bereitstellen kann, tritt ein Leistungsloch von ca. 20 ms bis 100 ms bei dem Umschaltvorgang auf, der beim Versorgungsnetz den Zusammenbruch auslösen könnte. Die Tiefe des Leistungslochs würde 100% bedeuten, da während des Wechsels vom Photovoltaikgenerator zur Batterie der Leistungsfluss kurzzeitig unterbrochen ist.

Der vorliegenden Erfindung liegt die Aufgabe zugrunde, die Gefahr einer Instabilität oder eines Zusammenbruchs des Versorgungsnetzes zu reduzieren, in dem ein weicher Schaltübergang mit nur einem kleinen vorübergehenden Leistungsverlust vorgenommen wird.

Diese Aufgabe wird bei der Vorrichtung erfindungsgemäß durch eine Steuervorrichtung gelöst, die bei Anliegen eines Notfallsignals, welches bei einer drohenden Instabilität des Versorgungsnetzes, insbesondere aufgrund eines Versorgungsengpasses oder auch einer drohenden Unterspannung an einem Netzpunkt, von dem Netzbetreiber an die Steuervorrichtung abgegeben wird, folgende Maßnahmen initiiert:
i) Im Falle einer Batteriespannung (U_{Batt}) oberhalb der aktuell von dem MPP-Regelglied eingestellten Spannung (U_{WR}) wird eine unverzügliche Zuschaltung der Batterie an den Eingang des Wechselrichters unter Beibehaltung der Aufschaltung des Photovoltaikgenerators an den Wechselrichter bewirkt;
ii) Im Falle einer Batteriespannung unterhalb der aktuell von dem MPP-Regelglied eingestellten Spannung wird die Zuschaltung der Batterie an den Eingang des Wechselrichters solange zurückgestellt, bis das MPP-Regelglied die an dem Eingang herrschende Spannung an die Batteriespannung angepasst hat und nach der Zuschaltung der Batterie wird die Spannung weiter abgesenkt, um einen Entladestrom aus der Batterie zu erzeugen.

Unter einem Notfallsignal wird dabei jedes Signal verstanden, was von dem Netzbetreiber oder einer von ihm bevollmächtigten oder beauftragten Stelle abgegeben wird, wenn die Netzsituation sich einem kritischen Zustand nähert. Das kann beispielsweise bei einem 230 Volt Versorgungsnetz mit einer maximal zulässigen Abweichung von z.B. 10 % nach unten und oben (entsprechend 207 Volt bis 253 Volt) eine untere Spannung von 210 Volt sein, bei der das Notfallsignal abgesetzt wird. Eine drohende Instabilität des Netzes kann auch durch eine kritische Abweichungen von der Netzfrequenz, durch einen unzulässig hohen Strom in einem Transformator zu einer anderen Netzebene und dergleichen entstehen. Bei einer Spannungs-sensitiven Erzeugung des Notfallsignals wird dieses vorteilhafterweise an die Steuervorrichtung abgegeben, wenn sich die Netzspannung am betrachteten Netzpunkt lediglich nur noch 1 Volt bis 5 Volt, insbesondere 2 Volt bis 4 Volt, oberhalb der zulässigen unteren Grenze befindet.

Bezüglich des Verfahrens wird die Aufgabe erfindungsgemäß dadurch gelöst, dass eine Steuervorrichtung bei Anliegen eines Notfallsignals, welches bei einem drohenden Zusammenbruch des Versorgungsnetzes, insbesondere aufgrund eines Versorgungsengpasses oder auch einer drohenden Unterspannung an einem Netzpunkt, von dem Netzbetreiber an die Steuervorrichtung abgegeben wird, folgende Schritte einleitet:
i) Die Batterien zumindest eines Teils, insbesondere aller Photovoltaikteilanlagen mit einer Batteriespannung oberhalb der aktuell von dem MPP-Regelglied eingestellten Spannung werden unverzüglich an den Eingang des zugeordneten Wechselrichters unter Beibehaltung der Aufschaltung des zugehörigen Photovoltaikgenerators zugeschaltet;
ii) Bei den Photovoltaikteilanlagen, deren Batterie eine Spannung unterhalb der aktuell von dem MPP-Regelglied eingestellten Spannung aufweist, wird die Zuschaltung der Batterie an den Eingang des Wechselrichters solange zurückgestellt, bis das MPP-Regelglied die an dem Eingang herrschende Spannung an die Batteriespannung angepasst hat, und nach der Zuschaltung der Batterie wird die Spannung weiter abgesenkt, um einen Entladestrom aus der Batterie zu erzeugen.

Die Maßnahme unter i) erhöht den Strom zum Wechselrichter ohne jeden Verzug und leistet zeitgleich einen ersten Beitrag zur Stabilisierung des Netzes. Die Maßnahme unter ii) trägt im ersten Moment kurzzeitig zu einer weiteren Destabilisierung des Netzes bei, indem für die Zeitdauer der Fehlanpassung an den maximalen Leistungspunkt lediglich eine um ca. 10% reduzierte Leistung aus dem PV-Generator zur Umwandlung in Wechselstrom zur Verfügung steht. Nach der Anpassung wird die Leistung sofort über die Batterieentladung angehoben und der Stabilisierungsbeitrag erfolgt. Das Leistungsloch bei der Durchführung der Zuschaltung der Batterie ist also wesentlich reduziert im Vergleich zu einem Umschaltvorgang mit Unterbrechung. Ein besonderer Vorteil ergibt sich, wenn bei der aktuellen Arbeitssituation der PV-Anlage mindestens eine Photovoltaikteilanlagen mit einer Batteriespannung über der MPP - Spannung vorliegt. Dann wird durch die nach Empfang des Notanforderungssignals sofort eingeleitete Zuschaltung der Photovoltaikteilanlage mit der hohen Batteriespannung bereits so viel zusätzliche Leistung für das Netz bereitgestellt, dass das beim Zuschaltvorgang von Photovoltaikteilanlagen mit einer Batteriespannung unterhalb der MPP - Spannung auftretende Leistungsloch zumindest teilweise über die Photovoltaikanlage als Ganzes kompensiert werden kann. Die Zuschaltung der Batterie erfolgt dabei parallel zu dem angeschlossenen Photovoltaikgenerator der Teilanlage, sodass sowohl die Batterie als auch die Photovoltaikteilanlage an den Wechselrichter angeschlossen sind und Energie in das Versorgungsnetz abgeben. Bei Vorliegen einer Photovoltaikteilanlage mit einer Batteriespannung oberhalb der momentan eingestellten MPP-Spannung wird also sofort deren Batterie zugeschaltet, bevor die Anpassung an die Batteriespannung bei anderen Photovoltaikteilanlagen eingeleitet wird. Durch die Zuschaltung der Batterie wird sich der Arbeitspunkt des betroffenen Photovoltaikteilgenerators leicht vom MPP weg verschieben, was aber die positive Gesamtbilanz bei der Erzielung eines sofortigen Stabilisierungsbeitrags nicht infrage stellt.

Es ist zweckmäßig, dass im Falle von mehreren zurückzustellenden Zuschaltungen von Batterien, die erforderlichen Anpassungen an den MPP der beteiligten Wechselrichter zeitlich gestaffelt vorgenommen werden. Liegen z.B. sechs Photovoltaikteilanlagen vor, bei denen die aktuelle MPP - Arbeitsspannung oberhalb der Batteriespannung liegt, sollte der Zuschaltvorgang für alle sechs Batterien nicht sofort oder gleichzeitig eingeleitet werden. Es gilt zu berücksichtigen, dass ein verstärktes Leistungsloch dadurch auftreten würde, dass der PV-Anlagen seitig generierte Strom bevorzugt zur Aufladung der Batterie dienen würde, anstelle dass er dem Wechselrichter zur Umwandlung zur Verfügung steht. Die sich daraus ergebende Notwendigkeit zur Anpassung der MPP - Arbeitsspannung an die Batteriespannung erfordert eine gewisse Zeitspanne, in der das zuvor angesprochene kleine Leistungsloch auftritt. Um zu vermeiden, dass alle sechs Photovoltaikteilanlagen zeitgleich die Anpassung vornehmen, was zu einem verstärkten Leistungsabfall von sechs mal 10%, also insgesamt 60% einer einzigen Photovoltaikteilanlage führen würde, ist die zeitliche Staffelung vorgesehen. Dadurch werden die Momente, zu denen die Anpassung eingeleitet wird, entzerrt, und anstelle einer vertieften Leistungsdelle ergeben sich nacheinander sechs kleine Leistungsdellen. Idealerweise ist die zeitliche Staffelung so konfiguriert, dass sich der Leistungsabfall von keiner Photovoltaikteilanlagen, der sich wegen der Anpassung an die Batteriespannung durch Verlassen des Maximalen Leistungspunktes ergibt, überschneidet mit dem Leistungsabfall einer anderen Photovoltaikteilanlage.

Um einen möglichst sanften (frei von größeren Dellen in der Leistungslieferung) Zuschaltvorgang der Batterieleistung zu erhalten ist es weiterhin zweckmäßig, wenn mit der Anpassung derjenigen Photovoltaikteilanlage begonnen wird, bei der der Abstand zwischen der dem aktuellen maximalen Leistungspunkt zugehörigen Spannung und der Batteriespannung am geringsten ist. Dort ist die Anpassung am schnellsten erreicht und die entsprechende Leistungsdelle ist besonders kurz. Da mit jedem erfolgten Zuschaltvorgang einer Batterie bereits eine Leistungserhöhung der Gesamtanlage einhergeht, wird so die Leistungsdelle der gesamten Photovoltaikanlage kurz gehalten. Dieses soll noch an einem Beispiel verdeutlichet werden.

Es wird angenommen, dass mehrere Photovoltaikteilanlagen vorliegen, deren Wechselrichter jeweils eine Nennleistung von 70 MW aufweisen. Ferner wird angenommen, dass die Spannung der Batterien von zwei der vorhandenen Photovoltaikteilanlagen, die aufgrund ihres Ladungszustands für eine zusätzliche Energieeinspeisung infrage kommen, 600 Volt beträgt. Erzeugt nun eine der Photovoltaikteilanlagen eine Leistung von 40 MW bei einer Spannung von 640 Volt und eine weitere Photovoltaikteilanlage eine Leistung von 50 MW bei einer Spannung von 680 Volt, so wird ein weicherer Übergang erreicht, wenn zunächst die erste Photovoltaikteilanlage, deren maximaler Leistungspunkt bei 640 Volt liegt, für die Zuschaltung der Batterie herangezogen wird. Deren Wechselrichter wird dann so angesteuert, dass sein Leistungspunkt bei einer Spannung von 600 Volt liegt, was der aktuellen Batteriespannung entspricht. Die sich daraus ergebende geringere Leistungsausbeute seines zugeordneten Photovoltaikgenerators wegen Verlassens des MPP wird in Kauf genommen. Nach der Anpassung wird die Batterie zugeschaltet und die Spannung entlang der aktuell vorliegenden MPP Kennlinie (welche von der Sonneneinstrahlung, der Temperatur etc. abhängt) wird weiter abgesenkt, um einen Entladestrom aus der Batterie zu provozieren. Dadurch arbeitet der Photovoltaikgenerator noch etwas weiter entfernt von seinem an sich möglichen MPP, also die Fehlanpassung wird noch etwas erhöht. Im Gegenzug addiert sich aber der Batterie-Entladestrom zu dem PV-Generatorstrom und es kann eine Leistung höher als die zuvor ohne Batteriezuschaltung vorgelegenen 40 MW, idealerweise eine Leistung entsprechend der Nennleistung von 70 KW, von dem Wechselrichter verarbeitet und in das Versorgungsnetz eingespeist werden. Diese zusätzliche Leistung von 30 MW trägt sofort zur Stabilisierung des Versorgungsnetzes bei und erlaubt es, auch weitere größere Dellen im Leistungsabfall hinzunehmen. Eine solche größere Delle würde zum Beispiel bei der Zuschaltung der Batterie der weiteren Photovoltaikteilanlage auftreten, da deren aktuelle zum MPP gehörige Arbeitsspannung mit 680 Volt um 40 Volt höher ist als die der ersten Photovoltaikteilanlage, also weiter entfernt von der Batteriespannung von 600 Volt, als die 640 Volt der ersten Photovoltaikteilanlage.

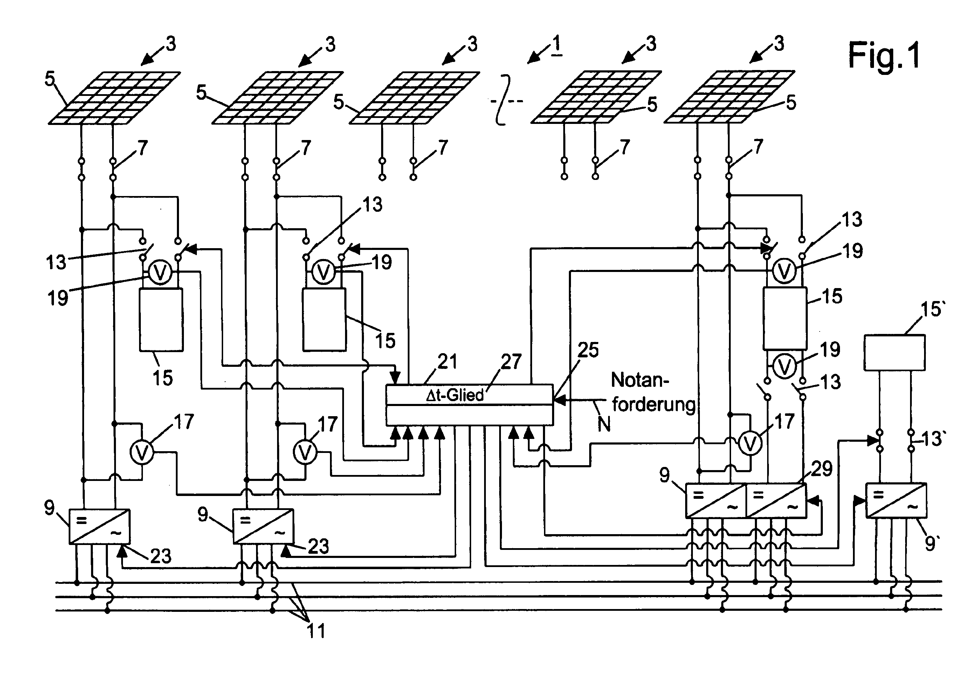

Es kann eine Situation auftreten, bei der eine oder mehrere der Photovoltaikteilanlagen den Photovoltaikgenerator nicht zugeschaltet haben, weil z.B. eine Wartung oder Reparatur anhängig ist. Auch bei diesen brach liegenden Teilanlagen kann die Batterie unmittelbar an den Eingang des Wechselrichters geschaltet werden, wenn das Notfallsignal eingeht. Der gleiche Effekt ist erzielbar, wenn zusätzlich zu den Photovoltaikteilanlagen ein getrennter Stand-by Wechselrichter mit zugeordneter Batterie vorgesehen ist. In beiden Fällen kann dem Versorgungsnetz dann ad hoc soviel zusätzliche Energie zur Verfügung gestellt werden, dass die Anpassung an die Batteriespannung bei allen eine Anpassung bedürfenden Photovoltaikteilanlagen synchron eingeleitet werden kann. Die zeitgleich zu erwartenden Leistungsdellen werden durch die bereits zuvor einsetzende Zusatzlieferung an elektrischer Energie durch die Stand-by Batterie oder die Batterie der nicht aktiven Photovoltaikteilanlage kompensiert. Im Ergebnis liegt so nach Eingang des Notfallsignals immer noch ein positiver Saldo bezüglich der das Versorgungsnetz stützenden Zusatzlieferung an elektrischer Energie vor. Weitere Vorteile und Ausgestaltungen der Erfindung ergeben sich aus der Beschreibung eines Ausführungsbeispiels anhand der Figur. Die Figur zeigt eine mehrere Photovoltaikteilanlagen umfassende Photovoltaikanlage, mit Notfallsignaleingang an der Steuervorrichtung.

In der Figur ist mit 1 eine Photovoltaikanlage bezeichnet, die insgesamt zehn Photovoltaikteilanlagen 3 aufweist. Die ersten beiden Photovoltaikteilanlagen 3 sowie die zehnte sind mit ihren wesentlichen, erfindungsrelevanten Komponenten gezeigt. Alle anderen Photovoltaikteilanlagen 3 sind identisch ausgebildet. Zu jeder Photovoltaikteilanlage 3 gehört ein Photovoltaikgenerator 5, der über eine erste Schaltvorrichtung 7 mit einem Wechselrichter 9 verbunden ist. Der Ausgang des Wechselrichters 9 ist mit einem Versorgungsnetz 11 verbunden, welches von einem Netzbetreiber oder einem Unternetzbetreiber, wie ein Stadtwerk, betrieben wird.

Über eine zweite Schaltvorrichtung 13 ist bei jeder Photovoltaikteilanlagen 3 eine zugeordnete Batterie 15 an den Eingang des Wechselrichters 9 zuschaltbar. Die Spannung U_{WR} über den Eingang des Wechselrichters 9 wird mittels einer ersten Spannungsmesseinrichtung 17 gemessen. Ebenfalls wird mittels einer zweiten Spannungsmesseinrichtung 19 die an den Klemmen der Batterie 9 herrschende Spannung U_{Batt} erfasst. Die genannten Bauteile sind bei jeder Photovoltaikteilanlagen 3 vorgesehen.

Von allen Photovoltaikteilanlagen 3 sind die erste und die zweite Schaltvorrichtung 7 bzw. 13, die erste und die zweite Spannungsmesseinrichtung 17 bzw. 19, sowie der Wechselrichter 9 mit einer Steuervorrichtung 21 verbunden. Die Verbindung kann drahtlos oder drahtgebunden sein. Dabei kann die Steuervorrichtung 21 folgende Funktionen ausüben: Sie kann die gemessenen Spannungswerte U_{WR} und U_{Batt} in einer inhärenten Recheneinheit (nicht gezeigt) verarbeiten, sie kann die Schalterstellung der ersten und der zweiten Schaltvorrichtung 7, 13 verändern und sie kann den Arbeitspunkt der Wechselrichter 9 separat für jeden einzelnen Wechselrichter 9 festlegen. Dazu weisen die Wechselrichter 9 jeweils einen Steuereingang 23 auf, über den die Betriebsweise der im Wechselrichter vorhandenen Halbleiterbauelement, insbesondere IGBT's, einstellbar ist.

Erfindungsgemäß weist die Steuervorrichtung einen Eingang 25 auf, an dem bei Bedarf vom Netzbetreiber ein Notfallsignal N angelegt werden kann. Die Umstände, unter denen ein solches Notfallsignal generiert und an den Eingang 25 der Steuervorrichtung 21 abgesetzt wird, sind bereits im einleitenden Teil erörtert worden.

Bei Anliegen des Notfallsignals ermittelt die Steuervorrichtung 21, welche Batterien 15 der einzelnen Photovoltaikteilanlagen eine Spannung oberhalb der jeweiligen aktuellen MPP Spannung haben. Zumindest ein Teil dieser Batterien 15 wird sofort zusätzlich zu den jeweiligen Photovoltaikgeneratoren 5 der Teilanlagen an die zugeordneten Wechselrichter 9 angeschlossen, ohne eine vorhergehende Arbeitspunktverschiebung beim MPP-Regelglied zur Spannungsanpassung vorzunehmen.

Weiterhin ermittelt die Steuervorrichtung 21 bei Anliegen des Notfallsignals N die übrigen Batterien 15, deren Spannung unterhalb des aktuellen MPP-Arbeitspunktes des Photovoltaikteilanlage 3 liegt, und wie hoch die Spannungsabweichung zwischen der Batteriespannung und der jeweiligen MPP Spannung ist. Ferner ermittelt die Steuervorrichtung diejenige Photovoltaikteilanlagen 3, deren Differenz zwischen der aktuellen Batteriespannung U_{Batt} und der vorliegenden Arbeitsspannung U_{WR} des aktuell vorliegenden maximalen Leistungspunkts MPP des Wechselrichters 9 am geringsten ist. Ist diese Photovoltaikteilanlagen 3 bestimmt, wird über die Signalleitung, die am Eingang 23 des bestimmten Wechselrichters 9 mündet, dessen Arbeitspunkt vom maximalen Leistungspunkt MPP weggeregelt, bis die Spannung U_{WR} gleich der Spannung U_{Batt} ist. Anschließend steuert die Steuervorrichtung 21 die zweite Schaltvorrichtung 13 so an, dass die zuvor geöffneten Schaltkontakte in die geschlossene Schaltstellung überführt werden. Damit liegen bei dieser einen, zuvor bestimmten Photovoltaikteilanlagen 3 der Photovoltaikgenerator 5 und die Batterie 15 parallel zu den Eingangsklemmen des Wechselrichter 9.

Als nächstes wird von der Steuervorrichtung 21 der Arbeitspunkt des Wechselrichters 9 weiter derart modifiziert, dass eine kleinere Spannung U_{WR} am Eingang anliegt als im Moment der Zuschaltung der Batterie 15 parallel zum PV-Generator 5. Aufgrund der dann vorliegenden Spannungsdifferenz zwischen der gößeren U_{Batt} und der kleineren U_{WR} wird es zu einem Entladestrom aus der Batterie 15 kommen, der vom Wechselrichter 9 in Wechselstrom umgewandelt und in das Versorgungsnetz 11 eingespeist wird. Die Summe der Ströme des PV-Generators 5 und der Batterie 15 ergibt multipliziert mit der herabgesetzten Spannung U_{WR} eine Leistung P, die insgesamt größer ist als die zuvor alleine von der Photovoltaikteilanlagen 3 aufgebrachten Leistung. Nach dem Zuschalten der Batterie 15 mit der geringsten Spannungsdifferenz zur MPP-Spannung wird bei der Photovoltaikteilanlage mit der zweitgeringsten Differenz ebenso verfahren, usw. bis eine aus Sicht des Netzbetreibers zufriedenstellende Stabilität des Versorgungsnetzes erzielt ist und das Notfallsignal N revidiert wird.

Die Steuervorrichtung 21 umfasst noch ein Zeitglied 27, welches dazu dient, eine zeitlich gestaffelte Anpassung der einzelnen Batteriespannungen U_{Batt} an die zugeordneten Wechselrichterspannungen U_{WR} zu erzielen. Daraus folgt dann konkludent, dass auch die zweiten Schaltvorrichtungen 13 der einzelnen Photovoltaikteilanlagen 3 nacheinander angesteuert werden, so dass sich ein zeitlich versetztes Zuschalten der Batterien 15 der einzelnen Photovoltaikteilanlagen 3 ergibt. Die Reihenfolge der Zuschaltung der einzelnen Photovoltaikteilanlagen 3 kann dabei unter Berücksichtigung der oben beschriebenen geringsten Spannungsdifferenzen zwischen der jeweiligen Batteriespannung U_{Batt} und der zugehörigen Wechselrichterspannung U_{WR} erfolgen. Beginnend mit der geringsten Spannungsdifferenz bei der zuerst zuzuschaltenden Batterie 15 werden nach und nach die Batterien 15 von den Photovoltaikteilanlagen 3 mit der zweitkleinsten, der drittkleinsten, der viertkleinsten usw. Spannungsdifferenz an die zugeordneten Wechselrichter angekoppelt.

Ein anderes Kriterium bezüglich der Auswahl mit welcher Photovoltaikteilanlagen 3 begonnen wird, kann die momentan vom PV-Generator 5 erzeugte oder die vom Wechselrichter 9 ins Versorgungsnetz 11 eingebrachte Leistung sein. Je kleiner die momentane Leistung ist, desto mehr an Zusatzleistung aus der Batterie 15 kann eingespeist werden. Bezugnehmend auf das eingangs diskutierte Zahlenbeispiel mit zwei Photovoltaikteilanlagen 3 mit gleicher Nennleistung des Wechselrichters 9 von 70 MW wird also diejenige Photovoltaikteilanlagen 3 bevorzugt, die momentan die geringere Leistung einspeist, also die mit 40 MW und nicht die mit 50 MW.

In der Figur ist noch eine zusätzliche Batterie 15' gezeigt, die über eine Schaltvorrichtung 13' an einen separaten Wechselrichter 9' angekoppelt werden kann. An den zusätzlichen Wechselrichter 9' ist kein Photovoltaikgenerator 3 angeschlossen. Diese Anordnung dient als Stand-by Maßnahme, mit der es möglich ist, beim Vorliegen des Notfallsignals N das Versorgungsnetz ohne jede Leistungsdelle zu stabilisieren. Dazu wird bei Anliegen des Notfallsignals N zunächst die Stand-by Batterie 15' an das Versorgungsnetz angekoppelt. Durch die so zusätzlich eingespeiste Leistung wird verdeckt, dass es in den folgenden Ankopplungsvorgängen der Batterien 15 der einzelnen Photovoltaikgenerator 3 zu vorübergehenden Leistungseinbrüchen kommt. Nimmt man als Basis die vor dem Abgeben des Notfallsignals herrschende Situation, wird durch die dann auftretenden Dellen lediglich eine kurzzeitig geringere Zusatzleistung in das Versorgungsnetz 11 eingespeist. Das Mehr an eingespeister Leistung wird also lediglich etwas verringert.

Derselbe Effekt kann erzielt werden, wenn zumindest einer der Wechselrichter 9 mit einem zusätzlichen Stack 29 versehen ist, der getrennt angesteuert werden kann. Das bedeutet, dass dieser Stack auf einem eigenen Betriebspunkt gefahren werden kann, der unabhängig ist von dem durch die MPP Regelung eingestellten Betriebspunkt für den Photovoltaikgenerator 5. Dieser eigene Betriebspunkt hat dann als Spannung die Batteriespannung U_{Batt} und bei Schließen der zweiten Schaltvorrichtung 13 wird sofort Zusatzleistung in das Versorgungsnetz 11 eingespeist. Ein solche Ausführung des Wechselrichter 9 ist in der Figur bei der letzten Photovoltaikgenerator 3 gezeigt, also links von den Stand-by Komponenten 15', 13' und 9'.

In beiden Fällen ist dann auch ein synchrones Zuschalten der Batterien 15 aller Photovoltaikgenerator 3 möglich.

### Bezugszeichenliste

- 1: Photovoltaikanlage
- 3: Photovoltaikteilanlage
- 5: Photovoltaikgenerator
- 7: erste Schaltvorrichtung
- 9, 9': Wechselrichter
- 11: Versorgungsnetz
- 13, 13': zweite Schaltvorrichtung
- 15, 15': Batterie
- 17: erste Spannungsmessvorrichtung
- 19: zweite pannungsmessvorrichtung
- 21: Steuervorrichtung
- 23: Eingang der Steuervorrichtung
- 25: Eingang für Notfallsignal
- 27: Zeitglied
- 29: zusätzlicher Stack
- N: Notfallsignal

## Patentansprüche

1. Photovoltaikanlage (1), die eine Mehrzahl von Photovoltaikteilanlagen (3) umfasst, von denen jede einen Photovoltaikgenerator (5) aufweist, der an den Eingang eines ihm zugeordneten Wechselrichters (9) zuschaltbar ist, wobei dem Wechselrichter ein Regelglied zur Einstellung des maximalen Leistungspunkts (MPP) der an ihm angeschlossenen Photovoltaikteilanlage inhärent ist, und von denen jede eine parallel zu dem Photovoltaikgenerator zuschaltbare Batterie (15) aufweist, wobei die Ausgänge aller Wechselrichter an ein gemeinsames Stromversorgungsnetz (11) anschließbar sind, welches von einem Netzbetreiber betrieben wird, mit einer Steuervorrichtung (21) die bei Anliegen eines Notfallsignals (N), welches bei einer drohenden Instabilität des Versorgungsnetzes von dem Netzbetreiber an die Steuervorrichtung abgegeben wird, folgende Maßnahmen initiiert:
i) Im Falle einer Batteriespannung (U_{Batt}) oberhalb der aktuell von dem MPP-Regelglied eingestellten Spannung (U_{WR}) wird eine unverzügliche Zuschaltung der Batterie an den Eingang des Wechselrichters unter Beibehaltung der Aufschaltung des Photovoltaikgenerators an den Wechselrichter bewirkt;
ii) Im Falle einer Batteriespannung (U_{Batt}) unterhalb der aktuell von dem MPP-Regelglied eingestellten Spannung wird die Zuschaltung der Batterie an den Eingang des Wechselrichters solange zurückgestellt, bis das MPP-Regelglied die an dem Eingang herrschende Spannung an die Batteriespannung angepasst hat, und nach der Zuschaltung der Batterie wird die Spannung weiter abgesenkt, um einen Entladestrom aus der Batterie zu erzeugen.

2. Photovoltaikanlage nach Anspruch 1, **dadurch gekennzeichnet, dass** im Falle von mehreren zurückzustellenden Zuschaltungen von Batterien (15), die erforderlichen Anpassungen an den maximalen Leistungspunkt (MPP) der beteiligten Wechselrichter (9) zeitlich gestaffelt vorgenommen werden.

3. Photovoltaikanlage nach Anspruch 2, **dadurch gekennzeichnet, dass** die zeitliche Staffelung so vorgenommen wird, dass sich die Leistungsabfälle von zwei Photovoltaikteilanlagen (3), die sich wegen der Anpassung an die Batteriespannung (U_{WR}) durch Verlassen des maximalen Leistungspunktes (MPP) der jeweiligen Photovoltaikteilanlagen ergeben, nicht überschneiden.

4. Photovoltaikanlage nach Anspruch 2 oder 3, **dadurch gekennzeichnet, dass** mit der Anpassung derjenigen Photovoltaikteilanlage (3) begonnen wird, bei der der Abstand zwischen der dem aktuellen maximalen Leistungspunkt (MPP) zugehörigen Spannung (UWR) und der Batteriespannung (U_{Batt}) am geringsten ist.

5. Photovoltaikanlage nach Anspruch 1, **dadurch gekennzeichnet, dass** bei Vorliegen einer Photovoltaikteilanlage (3) mit einer Batteriespannung (U_{Batt}) oberhalb der momentan eingestellten MPP-Spannung zunächst deren Batterie (15) zugeschaltet wird, bevor mit der Anpassung an die Batteriespannung bei anderen Photovoltaikteilanlagen begonnen wird.

6. Photovoltaikanlage nach Anspruch 5, **dadurch gekennzeichnet, dass** die Anpassung an die Batteriespannung (U_{Batt}) bei allen eine Anpassung bedürfenden Photovoltaikteilanlagen (3) synchron eingeleitet wird.

7. Photovoltaikanlage nach einem der Ansprüche 1 bis 6, **dadurch gekennzeichnet, dass** bei Photovoltaikteilanlagen (3) mit nicht zugeschaltetem Photovoltaikgenerator (5), die Batterie (15) unmittelbar an den Eingang des Wechselrichters (9) geschaltet wird.

8. Photovoltaikanlage nach Anspruch 1, **dadurch gekennzeichnet, dass** zusätzlich zu den Photovoltaikteilanlagen (3) ein getrennter Stand-by Wechselrichter (9') mit eigener zugeordneter Batterie (15') oder ein separat ansteuerbarer Stack (29) in einem vorhandenen Wechselrichter (9) an die zugehörige Batterie (15) vorgesehen ist.

9. Photovoltaikanlage nach einem der Ansprüche 2 bis 8, außer 4, **dadurch gekennzeichnet, dass** mit der Anpassung derjenigen Photovoltaikteilanlage (3) begonnen wird, bei der die aktuelle vorliegende Leistung am geringsten ist.

10. Verfahren zur Steuerung einer Photovoltaikanlage, die sich aus einer Mehrzahl von Photovoltaikteilanlagen zusammensetzt, von denen jede einen Photovoltaikgenerator umfasst, der an den Eingang eines ihm zugeordneten Wechselrichters zuschaltbar ist, wobei dem Wechselrichter ein Regelglied zur Einstellung des maximalen Leistungspunkts (MPP) der an ihm angeschlossenen Photovoltaikteilanlage inhärent ist, und von denen jede eine parallel zu dem Photovoltaikgenerator zuschaltbare Batterie aufweist, wobei die Ausgänge aller Wechselrichter an ein gemeinsames Stromversorgungsnetz anschließbar sind, welches von einem Netzbetreiber betrieben wird, wobei eine Steuervorrichtung bei Anliegen eines Notfallsignals, welches bei einer drohenden Instabilität des Versorgungsnetzes von dem Netzbetreiber an die Steuervorrichtung abgegeben wird, folgende Schritte einleitet:
i) Die Batterien zumindest eines Teils, insbesondere aller Photovoltaikteilanlagen mit einer Batteriespannung oberhalb der aktuell von dem MPP-Regelglied eingestellten Spannung werden unverzüglich an den Eingang des zugeordneten Wechselrichters unter Beibehaltung der Aufschaltung des zugehörigen Photovoltaikgenerators zugeschaltet;
ii) Bei den Photovoltaikteilanlagen, deren Batterie eine Spannung unterhalb der aktuell von dem MPP-Regelglied eingestellten Spannung aufweist, wird die Zuschaltung der Batterie an den Eingang des Wechselrichters solange zurückgestellt, bis das MPP-Regelglied die an dem Eingang herrschende Spannung an die Batteriespannung angepasst hat und nach der Zuschaltung der Batterie wird die Spannung weiter abgesenkt, um einen Entladestrom aus der Batterie zu erzeugen.

## Claims

1. A photovoltaic plant (1) comprising a plurality of partial photovoltaic plants (3) each of which comprises a photovoltaic generator (5) that can be connected to the input of an inverter (9) allocated thereto, wherein a control element for setting the maximum power point (MPP) of the partial photovoltaic plant connected thereto is inherent to the inverter, and each of which comprises a battery (15) that can be connected in parallel to the photovoltaic generator, wherein the outputs of all inverters can be connected to a common electrical grid (11) which is operated by a grid operator, **characterized in that** a control device (21) initiates the following measures if there is an emergency signal (N) which the grid operator delivers to the control device in the event of an imminent instability of the electrical grid:
i) If the battery voltage (U_{Batt}) is above the voltage (U_{WR}) that is currently set by the MPP control element, an immediate connection of the battery to the input of the inverter is caused while the connection of the photovoltaic generator to the inverter is maintained at the same time;
ii) If the battery voltage (U_{Batt}) is below the voltage currently set by the MPP control element, the connection of the battery to the input of the inverter is deferred until the MPP control element has adjusted the voltage applied to the input to the battery voltage; after the battery has been connected, the voltage is further reduced in order to generate a discharge current from the battery.

2. The photovoltaic plant according to Claim 1, **characterized in that**, if a plurality of connections of batteries (15) have to be deferred, the required adjustments to the maximum power point (MPP) of the inverters (9) involved are made in a time-staggered manner.

3. The photovoltaic plant according to Claim 2, **characterized in that** the time staggering is completed such that the power drops of two partial photovoltaic plants (3) which result from the adjustment to the battery voltage (U_{WR}) when leaving the maximum power point (MPP) of the respective partial photovoltaic plants do not overlap each other.

4. The photovoltaic plant according to Claim 2 or 3, **characterized in that** adjustment is started with the partial photovoltaic plant (3) in which the difference between the voltage (UWR) associated with the current maximum power point (MPP) and the battery voltage (U_{Batt}) is the smallest.

5. The photovoltaic plant according to Claim 1, **characterized in that**, if there is a partial photovoltaic plant (3) that has a battery voltage (U_{Batt}) above the currently set MPP voltage, the battery (15) thereof is first connected before the adjustment to the battery voltage is started in other partial photovoltaic plants.

6. The photovoltaic plant according to Claim 5, **characterized in that** the adjustment to the battery voltage (U_{Batt}) in all of the partial photovoltaic plants (3) requiring adjustment is simultaneously initiated.

7. The photovoltaic plant according to any one of Claims 1 to 6, **characterized in that**, in partial photovoltaic plants (3) with an unconnected photovoltaic generator (5), the battery (15) is directly connected to the input of the inverter (9).

8. A photovoltaic plant according to claim 1, **characterized in that**, in addition to the partial photovoltaic plants (3), a separate stand-by inverter (9') with its own allocated battery (15') or a stack (29) that can be activated separately in an existing inverter (9) is provided on the associated battery (15).

9. The photovoltaic plant according to any one of Claims 2 to 8 except 4, **characterized in that** adjustment is started with the partial photovoltaic plant (3) in which the currently available power is lowest.

10. A method for controlling a photovoltaic plant which consists of a plurality of partial photovoltaic plants, each of which comprises a photovoltaic generator that can be connected to the input of an inverter allocated thereto, wherein a control element for setting the maximum power point (MPP) of the partial photovoltaic plant connected thereto is inherent to the inverter, and each of which comprises a battery that can be connected in parallel to the photovoltaic generator, wherein the outputs of all the inverters can be connected to a common electrical grid which is operated by a grid operator, **characterized in that** a control device initiates the following steps if there is an emergency signal which the grid operator delivers to the control device in the event of an imminent instability of the electrical grid:
i) The batteries of at least a part, particularly of all partial photovoltaic plants, having a battery voltage above the voltage currently set by the MPP control element are immediately connected to the input of the allocated inverter while the connection of the associated photovoltaic generator is maintained at the same time.
ii) Where the partial photovoltaic plants the battery voltage of which is below the voltage currently set by the MPP control element are concerned, the connection of the battery to the input of the inverter is deferred until the MPP control element has adjusted the voltage applied to the input to the battery voltage; after the battery has been connected, the voltage is further reduced in order to generate a discharge current from the battery.

## Revendications

1. Installation photovoltaïque (1), qui comprend plusieurs installations photovoltaïques partielles (3) présentant toutes un générateur photovoltaïque (5), qui peut être connecté à l'entrée d'un onduleur (9) qui lui est attribué, l'onduleur étant muni d'un élément de régulation permettant de régler le point de puissance maximale (MPP) de l'installation photovoltaïque qui y est raccordée, tous ces onduleurs possédant une batterie (15) pouvant être raccordée en parallèle au générateur photovoltaïque, la sortie de tous les onduleurs pouvant être raccordée à un réseau électrique commun (11), exploité par un exploitant de réseau à l'aide d'un dispositif de commande (21) qui initie les procédures suivantes en cas de signal d'urgence (N), signal pouvant être émis au niveau du dispositif de commande en cas d'instabilité dangereuse du réseau électrique de l'exploitant de réseau :
i) Si la tension de la batterie (U_{Batt}) est supérieure à la tension paramétrée sur l'élément de régulation du MPP (U_{WR}), cela entraîne une connexion immédiate de la batterie à l'entrée de l'onduleur, tout en maintenant le raccordement du générateur photovoltaïque à l'onduleur ;
ii) Si la tension de la batterie (U_{Batt}) est inférieure à la tension paramétrée sur l'élément de régulation du MPP, la connexion de la batterie à l'entrée de l'onduleur est suspendue jusqu'à ce que l'élément de régulation du MPP adapte la tension présente à l'entrée à celle de la batterie, et une fois la batterie connectée, la tension est réduite à nouveau afin que la batterie produise un courant de décharge.

2. Installation photovoltaïque d'après la revendication 1, caractérisée en cela que s'il faut suspendre la connexion de plusieurs batteries (15), les ajustements nécessaires de la puissance maximale (MPP) des onduleurs concernés(9), se font de manière échelonnée dans le temps.

3. Installation photovoltaïque d'après la revendication 2, caractérisée en cela que l'échelonnement temporel est effectué de sorte que les baisses de puissance de deux installations photovoltaïques partielles (3) occasionnées lors du réglage de la tenson de la batterie (U_{WR}) et dues à l'écartement avec le point de puissance maximum (MPP), ne se chevauchent pas.

4. Installation photovoltaïque d'après la revendication 2 ou 3, caractérisée en cela que le réglage de la tension débute par l'installation photovoltaïques (3) sur laquelle l'écart entre la tension (UWR) correspondant à l'actuel point de puissance maximale (MPP) et la tension de la batterie (U_{Batt}) est le plus faible.

5. Installation photovoltaïque d'après la revendication 1, caractérisée en cela qu'en présence d'une installation photovoltaïque partielle (3) dont la batterie affiche une tension (U_{Batt}) supérieure à la tension du MPP actuellement paramétrée, sa batterie (15) sera activée avant de passer au réglage de la tension des batteries des autres installations photovoltaïques.

6. Installation photovoltaïque d'après la revendication 5, caractérisée en cela que le réglage de la tension de batterie (U_{Batt}) s'opère de manière synchronisée sur toutes les installations photovoltaïques (3) nécessitant un tel réglage de la tension.

7. Installation photovoltaïque d'après la revendication 1 à 6, caractérisée en cela que sur les installations photovoltaïques (3) dont le générateur photovoltaïque (5) n'est pas raccordé, la batterie (15) est connectée directement à l'entrée de l'onduleur (9).

8. Installation photovoltaïque d'après la revendication 1, caractérisée en cela qu'en plus des installations photovoltaïques partielles (3), l'installation dispose d'un onduleur stand-by (9') possédant une batterie qui lui est propre (15'), ou d'une pile à commande séparée (29) dans l'onduleur existant (9) de la batterie correspondante (15).

9. Installation photovoltaïque d'après les revendications 2 à 8 excepté la revendication 4, caractérisée en cela que le réglage de la tension débute par l'installation photovoltaïque (3) générant la puissance instantanée la plus faible.

10. Procédure de commande d'une installation photovoltaïque, qui comprend plusieurs installations photovoltaïques présentant toutes un générateur photovoltaïque, générateur qui peut être raccordé à l'entrée d'un onduleur qui lui est attribué, l'onduleur étant muni d'un élément de régulation permettant de régler le point de puissance maximale (MPP) de l'installation photovoltaïque qui y est raccordée, tous ces onduleurs possédant une batterie pouvant être connectée en parallèle au générateur photovoltaïque, la sortie de tous les onduleurs pouvant être raccordée à un réseau électrique commun, exploité par un exploitant de réseau à l'aide d'un dispositif de commande qui en cas de signal d'urgence émis au niveau du dispositif de commande en cas d'instabilité dangereuse du réseau électrique de l'exploitant de réseau, initie les procédures suivantes :
i) Les batteries, au moins en partie, et en particulier toutes celles des installations photovoltaïques présentant une tension de batterie supérieure à la tension paramétrée sur l'élément de régulation du MPP (U_{WR}), sont immédiatement connectées à l'entrée de l'onduleur qui lui est attribué, tout en maintenant le raccordement du générateur photovoltaïque correspondant.
ii) Sur les installations photovoltaïques dont la batterie présente une tension inférieure à la tension paramétrée sur l'élément de régulation du MPP, l'activation de la batterie à l'entrée de l'onduleur est suspendue jusqu'à ce que l'élément de régulation du MPP adapte la tension présente à l'entrée à celle de la batterie, et une fois la batterie connectée, la tension est réduite à nouveau afin que la batterie produise un courant de décharge.
